Europäisches Patentamt

European Patent Office

Office européen des brevets

(11) Publication number: 0 342 822 A2

# EUROPEAN PATENT APPLICATION

(21) Application number: 89304515.3

(22) Date of filing: 04.05.89

(51) Int. Cl.⁴: **C08J 5/18 , B29C 59/00**

(30) Priority: **17.05.88 US 194795**

(43) Date of publication of application:
**23.11.89 Bulletin 89/47**

(84) Designated Contracting States:
**BE DE FR GB IT NL**

(71) Applicant: **EXXON CHEMICAL PATENTS INC.**
**200 Park Avenue**
**Florham Park New Jersey 07932(US)**

(72) Inventor: **Scheller, Andor**
**4801 Burning Tree Drive**
**Baytown Texas 77521(US)**
Inventor: **Luker, Norman Elvoy**
**3326 Chapelwood Drive**
**Baton Rouge La. 70816(US)**
Inventor: **Le Grange, Gerald Anthony**
**336 Seyburn Drive**
**Baton Rouge La. 70821-0241(US)**

(74) Representative: **Veldhuizen, Albert Dirk**
**Willem et al**
**Exxon Chemical Limited Exxon Chemical**
**Technology Centre PO Box 1**
**Abingdon Oxfordshire OX13 6BB(GB)**

(54) Synthetic rubber bale wrap.

(57) A low blocking film for use as a rubber bale wrap includes a thermoplastic having an microembossed surface to provide the film with a gloss of 10 or less and a melting point of 104°C or less.

## SYNTHETIC RUBBER BALE WRAP

BACKGROUND OF THE INVENTION

This invention relates to a film for rubber bales. In one aspect, it relates to a method for transporting rubber in bulk form. In another aspect it relates to rubber bales covered with a microembossed film. (The term "rubber" means synthetic rubber as defined in ASTM D-1566.)

In the manufacture of synthetic rubber such as butyl rubber, chlorobutyl, EPDM, EPR, etc., raw rubber pieces (referred to as "crumbs") are passed from the reactor through a drying oven, and collected in compression mold where they are compressed into bales of dimensions generally in the range of 14"x28"x8". The bales are then placed in large containers ("bins") sized to receive from 30 to 45 of the bales for storage and transport. At the location of use (e.g. tire manufacturing plant), the bales are withdrawn from the bin and individually processed.

The bales are placed in the bin at elevated temperatures (120° F - 210° F) which causes bale-to-bale sticking problems, particularly for the bales in the lower part of the bin. The sticking and cold flow of the rubber makes it difficult to remove individual bales from the bin. It is not economically feasible to permit the bales to cool to room temperature before placing them in the bins.

In years past, the bins included two corrugated dividers to provide the bins with three compartments for receiving three bale stacks. The individual bales were coated with talc or other particulate material in an effort to reduce bale-to-bale sticking. The coating process was not only not very successful, its application as a powder created health problems. This lead to the development iof a thermoplastic film bale wrap. The bale wrap film is applied by conventional in-line equipment to completely encapsulate the rubber bale after the drying and molding steps but prior to being placed in the bin. The film thus prevents rubber-to-rubber contact and also resists cold flow of the rubber. The present bale wrap films include high pressure, low density homo polyethylene (LDPE) and ethylene vinyl acetate (EVA) copolymer.

Although the LDPE films were successful in preventing the sticking and the cold flow of the rubber bales, they presented downstream processing problems, particularly in compounding the rubber. The raw rubber must be mixed with ingredients and additives to provide a properly compounded rubber. Because of the high line speeds required in commercial processing operations, the compounding must be achieved within a relatively short period of time (usually between 1 and 1 1/2 minutes). In many compounding operations, the bale wrap film is not removed from the bale wrap but is instead blended and dispersed in the rubber. However, the LDPE film, because of its high melting point (108° C) does not readily disperse in the rubber and frequently causes defects in the finished product. The EVA films have a lower melting point and thus are more easily dispersed in the rubber, but these films have a relatively high blocking tendency and frequently aggravate the bale-to-bale sticking problem.

Tests have also shown that increasing antiblock addittives (e.g. talc and silica) does not provide significant improvement. Moreover, there is a limit as to the amount of antiblock additives that can be added before deterioration of critical film properties such as elasticity, tensile strength, heat sealability, and stress cracking occurs.

SUMMARY OF THE INVENTION

It has been discovered that by providing the bale wrap film with a certain surface profile, the blocking problem can be substantially reduced. The surface profile is characterized as microembossed to reduce the surface gloss to 10 or less, preferably between 3 to 8, as determined by ASTM D-2457. The microembossment mat be achieved by passing cast film through a set of embossing rollers wherein the chill roll thereof is provided with (a) a micro pattern or (b) a random micro roughness to impart a fine matte finish to the film. The microembossed film may also be prepared by blown film with post embossing.

The preferred film is one having a peak melting point of 104° C or less, particularly an ethylene copolymer, preferably EVA with vinyl acetate (VA) contents of 5 to 12 wt%. The preferred EVA contains from 6 to 9 wt% VA and has a peak melting point of 102° C or below.

The invention thus contemplates the combination of (a) a synthetic rubber bale and (b) a film completely covering the bale and being composed of a thermoplastic polymer (preferably EVA) having a melting point of about 104° C or less and having its outer surface microembossed to provide the film with a gloss of 10 or less, preferably between 3 to 8. The term "gloss" as used herein is determined by ASTM D-

2

2457-70 (Reapproved 1977) at 45° and peak melting point is determined by DSC (differential scanning calorimetry).

The invention also contemplates a method for wrapping a synthetic rubber bale with the film described above.

The term microembossed means the following

(a) a micro pattern embossed on a film surface and containing from 100 to 350 geometric repeating units; and

(b) a random (fine matte) finish giving the film a roughened surface which provides the film surface with an Ra (defined below) of 20 to 300 microinches, preferably 30 to 250 microinches.

The gloss of a film is a measure of the surface profile of a film. As stated in ASTM D-2457, gloss is a complex attribute of a surface which cannot be measured by a single number. Films of high gloss are smooth and therefore reflect more light. Films of low gloss on a micro scale diffuse or distribute light.

## DESCRIPTION OF THE PREFERRED EMBODIMENTS

In a compounding process wherein the bale wrap film is intermixed with the rubber, the film must have the following properties to serve as a rubber bale wrap:

good heat sealability and seal strength,

good antiblock of properties,

compatibility with the rubber,

complete dispersion of the film in the rubber when passed through mechanical mixer,

some elasticity,

low melting point,

good slip characteristics, (ie. low film/film coefficient of friction).

The antiblock properties and slip characteristics can be achieved by providing the film with microembossed surface wherein the film has a surface gloss of 10 or less and preferably between 3 and 8.

As mentioned above, the microembossed pattern may be provided with micro pattern or a matte finish. Each type of these embossed films are described below.

### Micro Pattern

This film is belt prepared by casting the film and passing it through counter rotating rollers, one of which is a chill roll having a geometric micro pattern formed on the surface thereof. For purposes of the present invention, micro pattern means a geometric pattern having from 100 to 350, preferably from 150 to 300, geometric repeating units per inch measured in the transverse direction and/or machine direction of the film. The most common pattern is a geometric pattern formed by intersecting embossed lines, the number of lines being from 100 to 350 per inch, preferably 150 to 300 per inch. By way of example, one such pattern is disclosed and described in U.S. Patent 4,376,147, the disclosure of which is incorporated by reference herein. The intersecting lines may form square, rectangular or diamond patterns on the film surface. Cast extrusion of this film and embossing process are well within the skill of the art. The micro pattern on the outer surface of the film diffuses light thereby providing the film with a low gloss.

It should also be mentioned that the embossment can be achieved by preparing the film in the conventional blown film process and subsequently heating the film and processing it through counter rotating rollers to engrave the microembossing pattern on the film surface.

### Matte Film

The matte film may be manufactured in a manner similar to the micropattern film except the chill roll has a random micro roughened surface such as that provided with a sandblasted chill roll. The surface of the chill roll should provide the film surface with a fine matte finish. The surface profile of the matte finish film may be characterized by its Ra and Rpm, which are defined as follows:

Ra - Height of roughness irregularities as measured by the average value of the departures from a center line drawn such that the sum of the areas above the line equals the sum of those below the line.

Rpm - Mean of the maximum profile height above the mean line on several passes.

Ra and RMS are terms recognized in the art as a surface roughness measurement and are approximately the same.

The preferred matte film has a gloss of between 3 and 8. The manufacturing process may be the same as that described in U.S. Patent No. 4,436,520, the disclosure of which is incorporated herein by reference. The preferred film is one wherein the surface profile, as measured by the Surtronics instrument, has a mean value of maximum profile height (Rpm) less than 150, preferably less than 100 microinches.

The surface roughness of film may be measured by a number of instruments capable of precise surface measurements. One such instrument is Surtronics 3 manufactured by Rank Taylor Hobson.

As in the case of the microembossed pattern, the matte finish film may also be achieved by first preparing the film by the blown method and subsequently processing the blown film through an embossing apparatus.

The outer film surface microembossed with a micropattern or fine matte finish, imparts the low gloss and hence the desired properties to the bale wrap film. It further improves the slip properties. The other properties, noted above, however, depend on the composition of the film. A film must have a melting point not greater than about 104° C and preferably between 70° and 102° C and more preferably between 85° and 102° C. The preferred films are copolymers of ethylene with vinylacetate (EVA), methacrylate (EMA), ethylene acrylate (EEA), and methyl methacrylate (EMMA). EVA having a VA content between 5 to 12 wt %, perferably 6 to 9 wt%, provides excellent properties in terms of compatibility, dispersability, heat sealability and elasticity. These properties coupled with the microsurface profile described above results in an excellent rubber bale wrap.

EVA film with VA content below 5 wt% does not readily blend with rubber and EVA film with VA content above 12 wt% exhibits excessive tackiness.

The polymers preferably have a MI of between 0.1 to 10 preferably .3 to 6.

The thickness of the bale wrap film is generally less than 10 mils, preferably between 0.5 to 6 mils, and more preferably to 1 to 3 mils.

The process of the present invention may be carried out using commercial rubber bale wrap equipment such as that sold by J&J.

In operations, the bale (typically 14 inches wide, 28 inches long, and 8 inches high) upon being discharged from the compressor mold is moved by a conveyor to the wrapping apparatus. The wrapping film, fed by two supply rolls, is disposed across the path of the bale. Movement of the the bale into the film sheet causes the film to cover the front, two sides and the rear where the film is heat sealed and cut from the film supply rolls. The film on the two sides of the bale is then heat sealed, completely enclosing the bale.

The outer surface of the film used in this process is microembossed as described above.

The process, in accordance with the present invention comprises: (a) wrapping a rubber bale with a thermoplastic film having a gloss of 10 or less and a peak melting point not greater than 104° C (preferably not greater than 102° C and having microembossed outer surface (gloss of 10 or less) to completely enclose the bale; (b) transporting or storing the bale in contact with other film wrapped rubber bales; and (c) compounding the rubber wherein the film is intermixed and dispersed with the rubber. This proces is carried out at temperatures between 120° F and 210° F· depending on various production parameters.

As mentioned above the preferred thermoplastic is an ethylene copolymers. The ethylene copolyers include those of ethylene and alpha-olefins haviang 3 to 16 carbon atoms such as propylene or 1-butene. Also included are copolymers of ethylene with unsaturated esters of a lower carboxylic acid or with an unsaturated carboxylic acid. The ethylene copolymers to be employed generally contain from 50 to 99 weight percent ethylene, most preferably from 60 to 95 weight percent ethylene.

The melting points of the ethylene copolymers preferably are no greater about 104° C and preferably between 85° C to 102° C.

## EXPERIMENTS

Experiments were run on microembossed film samples to determine their blocking properties. The film samples are described in Table I.

## TABLE I

### Film samples of EVA (6% VA; MI of 0.4) containing 8,000 ppm antiblock additive (silica) and 2,000 ppm erucamide.

|  | A | B | C | D* |
|---|---|---|---|---|
| Thickness (mils) | 1.96 | 1.97 | 2.01 | 2.00 |
| Ra (microinches) | 250 | pattern | 100 | 100 |
| Embossed caliper (mils) | 2.28 | 2.86 | 2.14 | 2.14 |
| Embossed caliper variations (mils) | 2.13-2.41 | 2.74-3.06 | 2.05-2.22 | 2.07-2.25 |
| Secant modules |  |  |  |  |
| MD (psi) | 13,400 | 11,900 | 13,700 | 13,700 |
| TD (psi) | 14,000 | 12,300 | 14,700 | 14,300 |
| Melting Point, DSC (°C) | - | - | 101.3°C | - |
| Gloss, 45° (embossed side) | 5 | 4-5 | about 5 | about 5 |

* 4,000 ppm silica; ** micro pattern (diamond shape)

The blocking experiments were run in accordance with ASTM Test Method D 3354 at various elevated temperatures ranging from 150°F to 180°F. The matte side of the matte films were measured. The blocking data shown in Table II are expressed as grams.

For comparative purposes, smooth EVA (6% VA, 0.4 MI) 2 mil blown film with 10,000 ppm and 20,000 ppm talc were tested. These samples are identified as samples E and F. Samples E and F have a gloss value in excess of 50.

### TABLE II

| SAMPLE | 150°F | 160°F | 170°F | 180°F |
|---|---|---|---|---|
| A | 24 | 42 | 56 | 125 |
| B (male) | 15 | 46 | 67 | 189 |
| (female) | 14 | 24 | 39 | 106 |
| C | 23 | 29 | 64 | 99 |
| D | 23 | 34 | 74 | 99 |
| E | 102 | 155 | >213 | >213 |
| F | 46 | 69 | >213 | >213 |

The above data demonstrate the improvement in antiblocking properties of the microembossed samples (A-D) over the smooth samples (E and F).

In order to satisfy the antiblock properties necessary for a rubber bale wrap, the film should preferably exhibit the following blocking values (based on ASTM D 3354-74):

| Temperature °F | Blocking (g) |
|---|---|
| 150 | less than 40 (preferably less than 30) |
| 160 | less than 60 (preferably less than 50) |
| 170 | less than 90 (preferably less than 80) |
| 180 | less than 150 (preferably less than 130) |
| 210 | less than 200 (preferably less than 170) |

Each film should satisfy the above condition only at the temperatures at which the bale is wrapped. Thus a film used at 150°F preferably should have a blocking value of less than 40 grams; and one employed at 160°F should have a blocking value of less than 60; etc. For temperatures above 210°F, the data are estimates.

**Claims**

1. A bale of rubber covered with a film to reduce blocking, the improvement wherein the film is a thermoplastic having a peak melting point of 104°C or less and having its outer surface microembossed to provide the film outer surface with a gloss of 10 or less based on ASTM D-2457-70 at 45°.

2. The film covered rubber bale according to claim 1 wherein the thermoplastic contains from 1000 to 12,000 preferably from 2000 to 10,000 ppm by weight of a finely divided antiblock additive and/or wherein the thermoplastic has a peak melting point of 102°C or less and/or 85°C or more.

3. The film covered rubber bale according to claim 1 or claim 2, wherein the thermoplastic is a copolymer of ethylene and a comonomer selected from the group consisting of vinyl acetate, ethyl acrylate, methyl methacrylate, and methacrylate, preferably an EVA containing from 5 to 12 wt% of VA and having a peak melting point of not greater than 102°C, especially EVA containing from 6 to 9 wt% of VA.

4. The film covered rubber bale according to any of claims 1 to 3, wherein the outer surface of the film has a fine matte finish or is microembossed in a random configuration, preferably with the outer surface of the film having an Ra of between 20 to 300 microinches, and especially with the Ra being between 30 and 250 microinches.

5. The film covered rubber bale according to any of claims 1 to 3, wherein the outer surface of the film is embossed with a micro pattern having 100 to 350 geometric repeating units per inch of the film surface, preferably with the micro pattern being formed by two sets of intersecting embossed lines, said film having from 100 to 350 of said embossed lines per inch of each set and especially with the film containing from 150 to 300 lines per inch, said lines defining a rectangle, square, or diamond.

6. The film covered rubber bale according to any of the preceding claims wherein the outer surface of the film has a gloss of not more than 8 based on ASTM Test Method D-2457-70 at 45°.

7. The film covered rubber bale according to any of the preceding claims in which the film completely encloses said bale.

8. A process of covering a bale of rubber in a film to reduce blocking wherein a film as set out in any of claims 1 to 6 is wrapped around the bale to fully enclose the bale.

9. A process according to claim 8 wherein the film is composed of copolymer of from 88 to 95 wt% of ethylene and from 5 to 12 wt% of a comonomer selected from the group consisting of vinyl acetate, ethyl acrylate, methacrylate, methyl methacrylate.

10. A process according to claim 8 or 9, wherein the bale is wrapped at a bale temperature of between 150°F and 210°F.

11. A process according to claim 10 wherein the bale is wrapped at a temperature of less than 160°F and has a blocking value of less than 60 grams based on ASTM test method D3354-74.

12. A process according to claim 10 wherein the bale is wrapped at a temperature of greater than 160°F but less than 170°F and the film has a blocking property of less than 90 grams based on ASTM Test Method D3354-74.

13. A process according to claim 10 wherein the bale is wrapped at a temperature of greater than 170°F but less than 180°F and the film has a blocking property of less than 150 grams based on ASTM Test Method D-3354-74.

14. A process according to claim 10 wherein the bale is wrapped at a temperature of greater than 180°F but less than 210°F and the film has a blocking property of less than 200 grams based on ASTM Test Method D-3354-74.